# EUROPÄISCHE PATENTSCHRIFT

(11) **EP 2 594 624 B1**
(45) Veröffentlichungstag und Bekanntmachung des Hinweises auf die Patenterteilung: **25.02.2015**
(21) Anmeldenummer: 12193067.1
(22) Anmeldetag: 16.11.2012
(51) Int. Cl.: C10L 3/08, C10B 53/02, F02B 43/08, F02C 3/28, C10J 3/00

(54) **Vorrichtung und Verfahren zur Energiegewinnung aus Biomasse**
Method and device for generating energy from biomass
Dispositif et procédé de production d'énergie à partir de biomasse

(30) Priorität: 16.11.2011 DE 102011086499
(43) Veröffentlichungstag der Anmeldung: 22.05.2013
(73) Patentinhaber: New Power Pack GmbH, 49377 Vechta (DE)
(72) Erfinder: Czwaluk, Heinz Erich, 49429 Goldenstedt (DE)
(74) Vertreter: Eisenführ Speiser

(56) Entgegenhaltungen:
- DE-A1- 10 245 469
- DE-A1-102007 058 548
- US-A- 4 353 713
- US-A1- 2009 084 666
- US-A1- 2010 251 615

## Beschreibung

Die vorliegende Erfindung betrifft eine Vorrichtung zur Energiegewinnung aus Biomasse, mit einer Pyrolyse- bzw. Vergasungseinrichtung zur Gewinnung eines Prozessgases aus der Biomasse, und einem Blockheizkraftwerk zur Gewinnung von Wärmeenergie und/oder elektrischer Energie aus mindestens einem Teil des Prozessgases.

Die Erfindung betrifft weiterhin ein Verfahren zur Energiegewinnung aus Biomasse.

Die vorstehend genannten Vorrichtungen und Verfahren werden vorwiegend eingesetzt, um als dezentrale mittlere bis großtechnische Anlagen entweder eine lokale Energieversorgung bereitzustellen, oder in der Verwertung von Biomasse elektrische Energie, und/oder Wärmeenergie zur Einspeisung in Versorgungsnetze bereitzustellen.

Die bekannten Vorrichtungen arbeiten grundsätzlich derart, dass mittels der Pyrolyse-bzw. Vergasungseinrichtung Biomasse mit einer vorbestimmten Feuchtigkeit teilweise oder gänzlich vergast wird und das hiermit erzeugte Prozessgas sodann einem Blockheizkraftwerk zur Erzeugung von Strom und/oder Wärme zugeführt wird. In dem Blockheizkraftwerk wird das Prozessgas üblicherweise unter Ausnutzung von Kraft-Wärmekopplung mittels Verbrennungsmotoren und/oder Turbinen zur Gewinnung elektrischer Energie und/oder Wärmeenergie umgesetzt.

Aus der US 2009/084666 A1 sind ein Verfahren und eine Vorrichtung zum Herstellen von flüssigem Biokraftstoff aus Biomasse mit Hilfe einer Pyrolyseeinrichtung bekannt. Das mit der Pyrolyseeinrichtung erzeugte Prozessgas wird aufgearbeitet und in einen Kondensator eingeleitet, wo der flüssige Blokraftstoff separiert wird. Das nach dem Auskondensieren zurückbleibende Restgas wird zur Energiegewinnung über eine Gasturbine geleitet.

Durch die US 2010/251615 A1 ist ein Verfahren zum Herstellen von Methan aus Biomasse mittels einer Pyrolyseeinrichtung offenbart. Das mit der Pyrolyseeinrichtung erzeugte Prozessgas wird weiterverarbeitet, so dass Methan in nahezu reiner Form als einziger Bestandteil zurückblelbt. Das erzeugte Methan kann abgeführt oder zum Aufheizen von in der Anlage verbleibenden Methan genutzt werden.

Aus der US 4,353,713 ist ein Verfahren zum Vergasen von Wasser und Kohlenstoff enthaltenen Substanzen, wie Kohle und Siedluhgsabfälle, in einem Pyrolyseprozess bekannt. Aus der bei der Pyrolyse entstehenden gasförmigen Phase wird in einem nachfolgenden Schritt Kohlendioxid herausgelöst, welches einem der Pyrolyse ; vorgelagerten Verfahrensschritt zugeführt wird. Das verbleibende Restgas ist ein Gemisch aus verschiedenen Gaskomponenten, welches zur Energiegewinnung einem Kraftwerk zugeführt wird.

Ferner ist aus DE 10 2007 058 548 A1 ein Verfahren und eine Vorrichtung zum Erzeugen von Biogas bekannt. Mittels eines Fermenters wird ein Prozessgas erzeugt, welches über eine Trennstufe geführt und in einen Methangasstrom und einen Restgasstrom aufgeteilt wird. Der Restgasstrom, welcher weiterhin einen erheblichen Anteil an Methan aufweist, wird zur Energieerzeugung einem Blockheizkraftwerk zugeführt.

Wenngleich Vorrichtungen der bekannten Art grundsätzlich zufriedenstellend funktionieren, wird es bisweilen als Nachteil empfunden, dass die Strom- und/oder Wärmeenergieerzeugung durch das Blockheizkraftwerk unmittelbar von der Versorgung der Pyrolyse- bzw. Vergasungseinrichtung mit Biomasse abhängt. Zudem besteht grundsätzlich der Bedarf, die Ausnutzung der zugrunde liegenden Biomasse insgesamt zu verbessern. Somit lag der vorliegenden Erfindung die Aufgabe zugrunde, eine Vorrichtung und ein Verfahren zur Energiegewinnung aus Biomasse anzugeben, welche jeweils eine verbesserte Ausnutzung der Biomasse bei der Energieerzeugung und gleichzeitig eine Flexibilisierung des Anlagenkonzepts bzw. Verfahrenskonzepts der eingangs genannten Art ermöglichen.

Die Erfindung löst die ihr zugrunde Aufgabe bei einer Vorrichtung der eingangs genannten Art durch eine Separatoreinrichtung, welche dazu eingerichtet ist, aus dem Prozessgas vollständig Methan abzuscheiden, wobei die Vorrichtung dazu angepasst ist, dem Blockheizkraftwerk zum Zweck der Energiegewinnung ein nach vollständiger Abscheidung von Methan aus dem Prozessgas verbleibendes Restgas zuzuführen. Es hat sich herausgestellt, dass bei entsprechender Steuerung des Pyrolyse- bzw. Vergasungsvorgangs und einer geeigneten Pyrolyseeinrichtung Methangas im zweistelligen Prozentbereich im Pyrolysegas vorhanden ist. Indem das vorhandene Methan vollständig mittels der Separatoreinrichtung aus dem Prozessgas abgeschieden wird, ist es nunmehr möglich, das Methangas unabhängig von dem Betrieb des Blockheizkraftwerks nutzbar zu machen. Das Blockheizkraftwerk kann weiterhin betrieben werden, da auch das Restgas trotz Abscheidens des Methans noch einen ausreichenden Brennwert aufweist.

Die erfindungsgemäße Vorrichtung weist gemäß einer vorteilhaften Weiterbildung Mittel zur Speicherung des abgeschiedenen Methans und/oder eine Einrichtung zur Einspeisung des abgeschiedenen Methans in ein Methan-Versorgungsnetz auf. Dadurch, dass das Methan nunmehr nicht unmittelbar zur Verbrennung dem Blockheizkraftwerk zugeführt werden muss, sondern wahlweise gespeichert und zwischengelagert werden kann, ist es möglich, nur bei besonderem Bedarf das Methangas in das Blockheizkraftwerk einzuspeisen. Alternativ ist es außerdem ermöglicht, das Methangas bei günstigen Marktpreisen für Methan zu veräußern. Das Veräußern geschieht vorzugsweise alternativ durch Abtransport und Abverkauf gespeicherten Methans oder unmittelbar durch Einspeisen des abgeschiedenen Methans in das Methan-Versorgungsnetz.

Hierdurch kann aus der vorhandenen Biomasse in Abhängigkeit der wirtschaftlichen Randbedingungen jederzeit ein optimaler Nutzen gezogen werden: ist viel Methan verfügbar, bzw. der Methanpreis auf dem Markt niedrig, aber im Gegenzug der Strombedarf entweder lokal oder in einem Stromnetz besonders hoch (und der Strompreis demzufolge ebenfalls hoch), kann das erhaltene Methan zur Stromerzeugung eingesetzt werden. Ist im umgekehrten Fall der Methanpreis hoch, kann das Methan verkauft oder eingespeist werden.

Gemäß einer bevorzugten Ausführungsform weist die Pyrolyse- bzw. Vergasungseinrichtung einen Reaktor auf, innerhalb dessen ein oder mehrere Förderelemente, insbesondere Förderschnecken, zum Vortrieb der eingeführten Biomasse vorgesehen sind, sowie ein oder mehrere Förderelemente, insbesondere Förderschnecken, zum Austrieb von Pyrolyse- bzw. Vergasungsrückständen, insbesondere Kohlepartikeln, aus dem Reaktor. Mit den Förderschnecken ist es möglich, die eingeführte Biomasse kontinuierlich durch den Reaktor hindurchzufördern. Vorzugsweise sind die ein oder mehreren Förderelemente dazu angepasst, die Biomasse zu kompaktieren. Hierdurch wird ein luftarmer oder bestenfalls luftfreier Transport der Biomasse in und durch den Reaktor ermöglicht. Eine Möglichkeit der Kompaktierung besteht beispielsweise in der Verwendung von Förderschnecken mit veränderlicher Spindelsteigung oder der Aneinanderreihung mehrerer Förderschnecken mit unterschiedlichen Spindelsteigungen.

Vorzugsweise weist das Förderelement für den Eintrag der Biomasse in den Reaktor einen Doppel-Schieber auf. Der Doppel-Schieber wirkt vorzugsweise mit mindestens einer Verdichter-Schnecke zusammen, um eine vorteilhafte Abdichtung im Bereich des Materialeintrags am Reaktor für die Biomasse zu gewährleisten.

Die Pyrolyse- bzw. Vergasungseinrichtung ist vorzugsweise dazu ausgebildet, unter Sauerstoffabschluss Im Reaktor und besonders bevorzugt mittels Unterdruckbeaufschlagung im Reaktor die Vergasung der Biomasse zu betreiben. Die insbesondere in Form von Kohlepartikeln vorliegenden Pyrolyse- bzw. Vergasungsrückstände können nach Austrieb aus dem Reaktor zur weiteren Nutzung abgegeben oder weiterverarbeitet werden, beispielsweise zur Weiterverarbeitung als Briketts, Pellets oder Aktivkohle.

Aufgrund der Förderelemente, insbesondere Förderschnecken, und der Kompaktierung der Biomasse ist es möglich, Biomasse unterschiedlicher Korngrößen zu verarbeiten. Vorzugsweise weist die Pyrolyse- bzw. Vergasungseinrichtung Mittel zur Zufuhr von Wasser oder Wasserdampf in den Reaktor auf. Dies birgt den Vorteil, dass der Betrieb der Pyrolyseeinrichtung im Wesentlichen unabhängig von der Feuchtigkeit der eingeführten Biomasse ist. Für den Fall, dass die Biomasse eine ausreichende Feuchtigkeit, besonders bevorzugt in einem Bereich zwischen 25% bis 40% aufweist, wird kein Wasser oder Wasserdampf in den Reaktor eingetragen. Bei abweichenden Feuchtigkeitsgehalten wird vorzugsweise mittels einer Steuereinrichtung die zum Erreichen des optimalen Betriebspunktes erforderliche Wassermenge in den Reaktor eingespeist.

In einer weiteren bevorzugten Ausführungsform der Erfindung ist die Pyrolyseeinrichtung dazu eingerichtet, eine allotherme Vergasung der Biomasse durchzuführen, und weist zu diesem Zweck Mittel zur, vorzugsweise indirekten, Wärmezufuhr in den Reaktor auf. Die Mittel zur Wärmezufuhr in den Reaktor sind vorzugsweise ausgewählt aus der Gruppe bestehend aus: elektrische Widerstandsheizung, Prozessgasheizung oder Rauchgasheizung. Bevorzugt wird in diesem Zusammenhang die elektrische Widerstandsheizung, weil sie mittels Strom betrieben werden kann, der von dem Blockheizkraftwerk selbst produziert wird.

Vorzugsweise erfolgt die thermische Behandlung der Biomasse mittels einer Kombination der vorgenannten Wärmeerzeuger und der jeweils damit umsetzbaren Wärmeübertragungsarten. Vorzugsweise wird das von der Prozessgas- oder Rauchgasheizung erzeugte heiße Synthesegas oder Rauchgas zum (indirekten) Vorwärmen des Eintragsmateriales verwendet. Hierdurch wird insbesondere der Energiebedarf an Strom für die Vergasung der Biomasse im Reaktor verringert und somit eine verbesserte Effizienz des Pyrolyseprozesses erreicht.

Die Betriebstemperatur innerhalb der Pyrolyseeinrichtung ist vorzugsweise oberhalb von 830°C, besonders bevorzugt 1000°C oder höher. Bei derartigen Temperaturen in Verbindung mit der indirekten Heizung wird die Erzeugung von Stickoxiden (NOₓ) vermindert.

Vorzugsweise weist die Vorrichtung gemäß der vorliegenden Erfindung eine Filtriereinrichtung zum Abscheiden von Pyrolyse- bzw. Vergasungsrückständen, insbesondere Kohlepartikeln, aus dem mittels der Pyrolyse- bzw. Vergasungseinrichtung erzeugten Prozessgas auf, welche stromabwärts der Pyrolyseeinrichtung vorgesehen ist. Stromabwärts ist in diesem Zusammenhang auf die Richtung des Förderstroms des Prozessgases bezogen. ,

Die Filtriereinrichtung weist vorzugsweise ein oder mehrere Filterelemente, vorzugsweise in Form von Keramikfilterkerzen auf. Die Keramikfitterkerzen weisen den Vorteil auf, dass sie temperaturstabil und leicht reinigbar sind. Insbesondere die Temperaturstabilität ist bei den im Wege der Pyrolyse bzw. Vergasung erzeugten Temperaturen des Prozessgases von wesentlicher Bedeutung.

Weiter vorzugsweise weist die Filtriereinrichtung Mittel zum Sammeln der von dem Filterelement oder den Filterelementen abgeschiedenen Pyrolyse- bzw. Vergasungsrückstände auf. Pyrolyse-Rückstände sind in dem Prozessgas unmittelbar im Anschluss an die Pyrolyse vorwiegend als Staub oder Feinstaub vorhanden, der von der Prozessgas-Strömung erfasst wird. Die Mittel zum Sammeln der abgeschiedenen Rückstände sind vorzugsweise dazu ausgebildet, die gesammelten Rückstände zur externen Nutzung oder Weiterverarbeitung bereitzustellen. Die Sammel-Mittel sind vorzugsweise als Auffangbehälter ausgebildet.

Gemäß einer weiteren bevorzugten Ausführungsform der vorliegenden Erfindung weist die Vorrichtung eine Gaswäscheeinrichtung zum Abscheiden von Prozessgas-Kondensat aus dem Prozessgas auf. Als Prozessgas-Kondensat sind insbesondere Teerbestandteile des Pyrolysegases zu nennen.

Vorzugsweise ist zwischen der Filtriereinrichtung und der Gaswäscheeinrichtung ein Wärmetauscher zur Abkühlung des von der Pyrolyseeinrichtung in Richtung der Filtriereinrichtung abgegebenen Prozessgases angeordnet. Gemäß alternativer Ausführungsformen ist der Wärmetauscher als separates Bauteil ausgebildet, und/oder strukturell der Filtriereinrichtung oder strukturell der Gaswäscheeinrichtung zugeordnet. Vorzugsweise ist der Wärmetauscher dazu ausgebildet, die aus dem Prozessgas abgeführte Wärmeenergie zur Nutzung bereitzustellen, beispielsweise für Trocknungsverfahren der lagernden und noch nicht in die Pyrolyseeinrichtung eingeführten Biomasse, zur Speisung von Fernwärme oder Wärmespeichern. Vorzugsweise ist der Wärmetauscher zur Abkühlung einstufig oder mehrstufig auf eine Prozessgas-Temperatur in einem Bereich von 25°C bis 50°C, besonders bevorzugt in einem Bereich von 30°C bis 40°C angepasst. In diesen Temperaturbereichen und insbesondere bei einer Temperatur um etwa 40°C kondensieren Teerbestandteile und andere höhermolekulare Bestandteile, die zur Weiterverarbeitung in nachfolgenden Arbeitsschritten in Form von Verunreinigungen störende Effekte zeigen, hierbei aus. Die Gaswäscheeinrichtung ist vorzugsweise dazu ausgebildet, ein Spülmittel, vorzugsweise Pflanzenöl, zu- und abzuführen, um das Prozessgas-Kondensat aus dem Prozessgas auszuwaschen. Besonders bevorzugt ist die Gaswäscheeinrichtung dazu eingerichtet, das zugeführte Prozessgas auf eine Temperatur im Bereich von 80°C bis 100°C mittels Wärmeauskopplung zu senken, anschließend Pflanzenöl, vorzugsweise Rapsöl, zuzuführen (beispielsweise mittels Eindüsen) und anschließend wieder abzuführen. Vorzugsweise erfolgt hieran anschließend die Absenkung der Temperatur des Prozessgases auf einen der vorstehend erwähnten Bereiche.

Gemäß einer weiteren bevorzugten Ausführungsform weist die Vorrichtung Mittel zur Rückführung des in der Gaswäscheeinrichtung abgeschiedenen Prozessgas-Kondensats in die Pyrolyseeinrichtung auf. Hierdurch wird es ermöglicht, das Kondensat in einem zweiten Durchlauf in seine weiteren Bestandteile zu zerlegen, die ihrerseits nicht erneut oder nur teilweise in Form von Prozessgas-Kondensat ausfallen.

Weiter vorzugsweise weist die erfindungsgemäße Vorrichtung eine Sammeleinrichtung auf, welche dazu angepasst ist, die aus dem Reaktor der Pyrolyseeinrichtung ausgetriebenen und/oder die in der Filtriereinrichtung abgeschiedenen gesammelten Pyrolyse-Rückstände, insbesondere Kohlepartikel, zu sammeln und zur Abfuhr bereitzustellen.

Weiter vorzugsweise weist die Sammeleinrichtung Mittel zum Kompaktieren der gesammelten Pyrolyse-Rückstände, insbesondere Kohlepartikel, auf. Vorzugsweise sind die Mittel zum Kompaktieren als eine oder mehrere Austragsverdichterschnecken ausgebildet. Die Austragsverdichterschnecken sind vorzugsweise dazu eingerichtet, die Pyrolyseeinrichtung und somit jedenfalls mittelbar das Gesamtsystem gegen Falschlufteintritt abzudichten. Nach Ausschleusung der Feststoffpartikel aus den Austragsverdichterschnecken zerfallen die Pyrolyse- bzw. Vergasungsrückstände entweder wieder, oder werden gemäß einer bevorzugten Alternative mittels einer sekundären Kompaktier-Einrichtung - vorzugsweise unter Zugabe eines Bindemittels - kompaktiert.

Gemäß einer weiteren bevorzugten Ausführungsform der Erfindung weist die Vorrichtung, vorzugsweise die Separatoreinrichtung, zum Zweck des Abscheidens von Methan aus dem Prozessgas eine oder mehrere selektiv mit Überdruck oder Unterdruck beaufschlagbare Adsorptions-Filtereinheiten auf, wobei die Adsorptions-Filtereinheiten dazu angepasst sind, bei Überdruckbeaufschlagung niedermolekulare Bestandteile des der Separatoreinrichtung zugeführten Prozessgases zu adsorbieren, und weist die Separatoreinrichtung Mittel zum Abführen des nicht adsorbierten Teils des Prozessgases auf. Als Adsorber-Material ist vorzugsweise Aktivkohle, insbesondere imprägnierte Aktivkohle ausgewählt. Alternativ ist das Adsorber-Material vorzugsweise ein Zeolith. Unter niedermolekularen Bestandteilen wird insbesondere Stickstoff, Sauerstoff, Wasser, Schwefelwasserstoff (H₂S), Kohlenstoffdioxid verstanden. Methan ist im Sinne dieser Definition nicht niedermolekular und wird nicht adsorbiert.

Die Adsorptions-Filtereinheiten sind vorzugsweise dazu angepasst, bei Unterdruckbeaufschlagung die zuvor adsorbierten niedermolekularen Bestandteile des der Separatoreinrichtung zugeführten Prozessgases freizugeben, und die Separatoreinrichtung weist Mittel zum Abführen dieser Bestandteile des Prozessgases als Restgas auf. Bei Unterdruckbeaufschlagung wird mit anderen Worten ein Regenerationsbetrieb der Filtereinheit bzw. Filtereinheiten durchgeführt. Durch entsprechende Taktung mehrerer Adsorptions-Filtereinheiten mit zeitlichem Versatz zueinander wird vorzugsweise ein quasi-kontinuierlicher Förderstrom sowohl von durch Unterdruckbeaufschlagung freigegebenem Restgas als auch unter Überdruckbeaufschlagung abgeführtem (methanreichem) Prozessgas erzielt. Bevorzugt weist die Separatoreinrichtung drei oder mehr Filtereinheiten auf, wobei am Beispiel von drei Filtereinheiten erläutert jeweils zu einem Betrachtungszeitpunkt eine Filtereinheit mit Überdruck beaufschlagt ist (Abscheidebetrieb), eine weitere Filtereinheit mit Unterdruck beaufschlagt ist (Regenerationsbetrieb), und eine dritte Filtereinheit betriebsbereit zum Beaufschlagen mit Überdruck bereitgehalten wird (Standby-Betrieb).

In einer weiteren bevorzugten Ausführungsform der Erfindung weist die Vorrichtung, besonders bevorzugt die Separatoreinrichtung, zum Zweck des Abscheidens von Methan aus dem Prozessgas zusätzlich oder alternativ zu der bzw. den Adsorptions-Filtereinheiten eine oder mehrere Membran-Filtereinheiten auf, wobei die Membranfiltereinheit bzw. -einheiten jeweils eine Kunststoffmembran aufweist bzw. aufweisen. Die Kunststoffmembran weist vorzugsweise eine im Vergleich zu den Permeabilitäten einiger oder sämtlicher übriger Prozessgasbestandteile verminderte Methanpermeabilität auf. Die Membran weist ferner vorzugsweise eine Hochdruckseite auf, auf welcher sich das Prozessgas unter Druckbeaufschlagung aufstaut und durch die Membran gedrückt wird. Aufgrund ihrer unterschiedlichen Permeabilitäten durchdringen die meisten Prozessgasbestandteile die Membran, während ein Großteil des Methans von der Membran zurückgehalten wird. Besonders bevorzugt ist die Separatoreinrichtung dazu angepasst, Prozessgas bei einem Druck in einem Bereich von 25 bar bis 40 bar durch die Membran zu führen, um einen beschleunigten Trennvorgang zu ermöglichen.

Gemäß einer bevorzugten Weiterbildung der Erfindung weist die Vorrichtung Mittel zur Methanisierung des Restgases und/oder des Prozessgases unter Verwendung eines Katalysators auf. Vorzugsweise sind die Mittel zur Methanisierung dazu ausgebildet, dann eine Methanisierung vorzunehmen, wenn in dem Restgas und/oder dem Prozessgas zur Umwandlung jeweils ein Teil Kohlenstoffmonoxid und drei Teile Wasserstoff anwesend sind. Diese werden zu je einem Teil Methan und einem Teil Wasser umgewandelt. Falls in dem Restgas ein anderes als das vorstehende Verhältnis vorliegt, sind vorzugsweise Mittel zur Wasserstoffzufuhr vorgesehen, mittels welcher ein ausreichender Wasserstoff-Massenstrom zur Herstellung des vorstehenden Verhältnisses eingespeist werden kann. Alternativ oder zusätzlich sind Mittel zum Herbeiführen einer Shift-Reaktion vor der Methanisierungsreaktion vorgesehen. Solche Shift-Reaktionen sind als Wassergas-Shift-Reaktionen, kurz WGS bekannt.

Gemäß einer bevorzugten Alternative weisen die Mittel zur Methanisierung eine Reaktionseinrichtung zur Durchführung eines Sabatier-Prozesses auf. Die Reaktionseinrichtung weist vorzugsweise einen Wasserstoff-Separator zum Abscheiden von Wasserstoff aus dem Prozessgas oder dem Restgas, einen Kohlenstoffdloxid-Separator zum Abscheiden von Kohlenstoffdioxid aus zugeführter Luft und/oder vorzugsweise Abgasen aus dem Blockheizkraftwerk, und eine Reaktionskammer auf. In der Reaktionskammer läuft bei dem Sabatier-Prozess die Reaktion von einem Teil Kohlenstoffdioxid und vier Teilen Wasserstoff zu einem Teil Methan und 2 Teilen Wasser ab.

Als Katalysator wird vorzugsweise ein Nickelkatalysator verwendet, weiter vorzugsweise ein Nickelkatalysator mit Aluminiumoxid und Zirconiumoxid als Promoter, Alternativ wird beispielsweise ein Rutheniumkatalysator verwendet.

Die Mittel zur Methanisierung sind vorzugsweise stromaufwärts von der Separatoreinrichtung angeordnet, oder gemäß einer alternativen bevorzugten Ausführungsform strukturell der Separatoreinrichtung zugeordnet, darin allerdings stromaufwärts der Adsorptions-Filtereinheit oder der Adsorptions-Filterelnheiten angeordnet.

In einer alternativen Ausgestaltung ist die Separatoreinrichtung stromabwärts des Wasserstoff-Separators angeordnet und zur Aufnahme von dem aus dem Wasserstoff-Separator abgegebenen Prozessgas mit verringertem Wasserstoff-Anteil eingerichtet.

In einer vorteilhaften Weiterbildung sind stromabwärts der Mittel zur Methanisierung Mittel zur Abscheidung des gebildeten Kohlenstoffdioxids vorgesehen, z.B. mittels Druckwechseladsorption, sowie zur Abscheidung des Wasserdampfs, beispielsweise mittels adsorptiver Verfahren, absorptiver Verfahren, und/oder Temperaturabsenkung.

Gemäß einer weiteren bevorzugten Ausführungsform weist die Vorrichtung Mittel zum Entfeuchten des Prozessgases auf, die vorzugsweise stromaufwärts von den Mitteln zur Methanisierung und/oder der Separatoreinrichtung angeordnet sind. Weiter vorzugsweise weist die Vorrichtung zudem Filtermittel zum Abscheiden von Katalysatorgiften auf, vorzugsweise Aktivkohlefilter, die stromaufwärts von den Mitteln zur Methanisierung und/oder der Separatoreinrichtung angeordnet sind. Somit kann das Prozessgas trocken und frei von Katalysatorgiften etc. in den katalytischen Folgeprozess (im Fall der Methanisierung) bzw. in die Separatoreinrichtung eintreten, was die Prozessqualität weiter verbessert.

Die Erfindung löst die ihr zugrunde liegende Aufgabe bei einem Verfahren der eingangs genannten Art mit den Schritten:
- Gewinnen eines Prozessgases aus der Biomasse mittels einer Pyrolyseeinrichtung,
- Gewinnen von Wärmeenergie und elektrischer Energie aus mindestens einem Teil des Prozessgases mittels eines Blockheizkraftwerkes,
gekennzeichnet durch die Schritte:
- vollständiges Abscheiden von Methan aus dem Prozessgas mittels einer Separatoreinrichtung, und
- Zuführen eines nach dem vollständigen Abscheiden von Methan aus dem Prozessgas verbleibenden Restgases zu dem Blockheizkraftwerk zum Zweck der Energiegewinnung.

Hinsichtlich der Vorteile des erfindungsgemäßen Verfahrens wird auf die obigen Ausführungen zur erfindungsgemäßen Vorrichtung verwiesen. Die dort erwähnten Vorteile der Erfindung und der bevorzugten Ausführungsformen gelten ebenso für das erfindungsgemäße Verfahren.

Das erfindungsgemäße Verfahren wird vorzugsweise weitergebildet durch die Schritte:
- Speichern des abgeschiedenen Methans, und/oder
- Einspeisen des abgeschiedenen Methans in ein Methan-Versorgungsnetz.

Das Verfahren gemäß der Erfindung wird zudem vorteilhaft weitergebildet durch einen, mehrere oder sämtliche der Schritte:
- Verdichten der Biomasse,
- Fördern der Biomasse in und durch einen Reaktor der Pyrolyse- bzw. Vergasungseinrichtung,
- Unterdruckbeaufschlagung des Reaktors,
- Zuführen von Wasser oder Wasserdampf in den Reaktor,
- Zuführen von Wärme, vorzugsweise indirekt, zum allothermen Vergasen der Biomasse, und
- Austreiben von Pyrolyse-Nergasungsrückständen, insbesondere Kohlepartikeln, aus dem Reaktor.

Gemäß einer weiteren bevorzugten Ausführungsform wird das erfindungsgemäße Verfahren vorteilhaft weitergebildet durch:
- Abscheiden von Pyrolyse- bzw. Vergasungs-Rückständen, insbesondere Kohlepartikeln, aus dem mittels der Pyrolyse- bzw. Vergasungseinrichtung erzeugten Prozessgas, und/oder
- Sammeln der von dem Filterelement oder den Filterelementen abgeschiedenen Pyrolyse- bzw. Vergasungs-Rückstände.

Vorzugsweise umfasst das erfindungsgemäße Verfahren einen, mehrere oder sämtliche der Schritte:
- Abscheiden von Prozessgas-Kondensat aus dem Prozessgas,
- Abkühlen des von der Pyrolyseeinrichtung in Richtung der Filtriereinrichtung angegebenen Prozessgases,
- Abführen der Wärmeenergie und Bereitstellung für Speicherung oder Nutzung,
- Spülen des Prozessgases, vorzugsweise mittels Pflanzenöl, und
- Rückführen des abgeschiedenen Prozessgas-Kondensats in die Pyrolyse- bzw. Vergasungseinrichtung.

Vorzugsweise wird die Wärmeenergie zur Wärmerückgewinnung, für Trocknungsverfahren, Fernwärme oder weitere Nutzungsarten bereitgestellt. Das Abkühlen des Prozessgases erfolgt vorzugsweise entlang der obigen Ausführungen unter Bezugnahme auf die erfindungsgemäße Vorrichtung.

Weiter vorzugsweise umfasst das erfindungsgemäße Verfahren einen, mehrere oder sämtliche der Schritte:
- Sammeln der aus dem Reaktor der Pyrolyse- bzw. Vergasungseinrichtung ausgeriebenen Pyrolyse- bzw. Vergasungs-Rückstände, insbesondere Kohlepartikel,
- Sammeln der in der Filtriereinrichtung gesammelten Pyrolyse- bzw. Vergasungs-Rückstände, insbesondereKohlepartikel,
- Bereitstellen der gesammelten Pyrolyse- bzw. Vergasungs-Rückstände zur Abfuhr, und
- Kompaktieren der gesammelten Pyrolyse- bzw. Vergasungs-Rückstände.

Das Verfahren gemäß der Erfindung wird vorzugsweise weitergebildet mit einem, mehreren oder sämtlichen der Schritte:
- selektives Beaufschlagen einer oder mehrerer Adsorptions-Filtereinheiten der Separatoreinrichtung mit Überdruck, wobei niedermolekulare Bestandteile des der Separatoreinrichtung zugeführten Prozessgases adsorbiert werden,
- selektives Beaufschlagen der einen oder mehreren Adsorptions-Filtereinheiten der Separatoreinrichtung mit Unterdruck, wobei die zuvor adsorbierten niedermolekularen Bestandteile des der Separatoreinrichtung zugeführten Prozessgases freigegeben werden,
- Abführen des nicht adsorbierten Teils des Prozessgases aus der Separatoreinrichtung, und
- Abführen der freigegebenen niedermolekularen Bestandteile des der Separatoreinrichtung zugeführten Prozessgases als Restgas aus der Separatoreinrichtung in Richtung des Blockheizkraftwerkes.

In noch einer weiteren bevorzugten Ausführungsform des Verfahrens umfasst dies die Methanisierung des Restgases und/oder des Prozessgases unter Verwendung eines Katalysators. Hierbei erfolgt, wie bereits im Zusammenhang mit der erfindungsgemäßen Vorrichtung erörtert, vorzugsweise eine Umwandlung jeweils eines Teils Kohlenstoffmonoxid und drei Teilen Wasserstoff zu je einem Teil Methan und einem Teil Wasser. Hinsichtlich des Katalysators wird auf die obigen Ausführungen verwiesen.

Vorteile des erfindungsgemäßen Verfahrens und seiner bevorzugten Ausführungsformen gelten auch in gleicher Weise für die oben erläuterte Vorrichtung.

Im Folgenden wird die vorliegende Erfindung anhand bevorzugter Ausführungsformen und unter Bezugnahme auf die beigefügten Figuren näher beschrieben. Hierbei zeigen:
- Figur 1: eine Prinzipskizze der erfindungsgemäßen Vorrichtung,
- Figur 2: eine Prinzipskizze einer Pyrolyse- bzw. Vergasungseinrichtung für eine bevorzugte Ausführungsform der erfindungsgemäßen Vorrichtung,
- Figur 3: eine erste Prinzipskizze der Separatoreinrichtung gemäß einer bevorzugten Ausführungsform der vorliegenden Erfindung,
- Figur 4: eine zweite Prinzipskizze und Detaildarstellung eines Teils der Separatoreinrichtung aus Figur 3,
- Figur 5: eine Prinzipskizze der erfindungsgemäßen Vorrichtung gemäß einer bevorzugten Ausführungsform, und
- Figur 6: eine Prinzipskizze der erfindungsgemäßen Vorrichtung gemäß einer weiteren bevorzugten Ausführungsform.

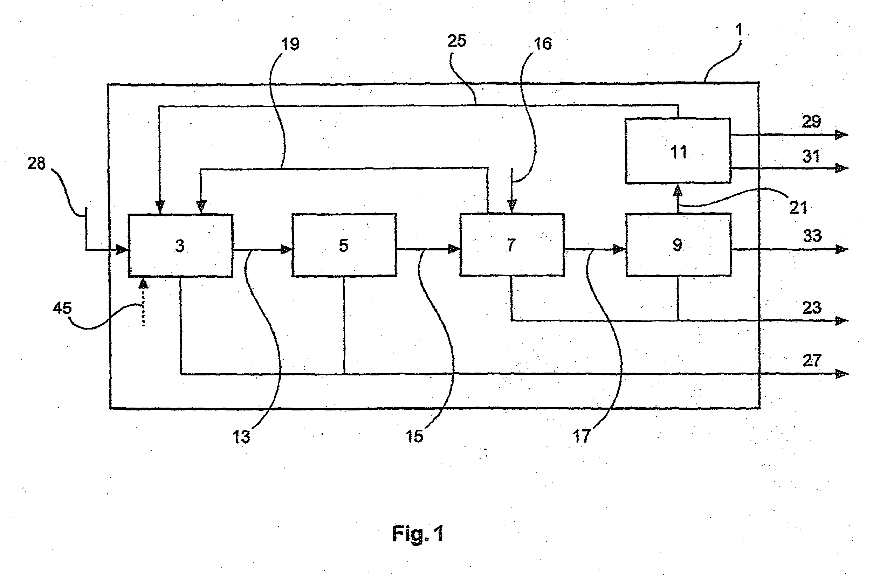

Eine bevorzugte Ausführungsform der erfindungsgemäßen Vorrichtung 1 ist in Figur 1 schematisch abgebildet. Die Vorrichtung 1 weist eine Pyrolyse- bzw. Vergasungseinrichtung 3 auf, eine Filtriereinrichtung 5, eine Gaswäscheeinrichtung 7, eine Separatoreinrichtung 9, und ein Blockheizkraftwerk 11. Die Pyrolyse- bzw. Vergasungseinrichtung 3 ist dazu angepasst, mittels eines Reaktors Biomasse zu vergasen. Die Vorrichtung 1 weist eine Leitung 13 zwischen der Pyrolyse- bzw. Vergasungseinrichtung 3 und dem Staubfilter 5 auf, welche zum Leiten der vergasten Biomasse in Form von Prozessgas angepasst ist. Vorzugsweise ist die Leitung 13 gasdicht, temperaturbeständig sowie korrosions- und säurebeständig. Die Filtriereinrichtung 5 ist dazu eingerichtet, dass mittels der Leitung 13 zugeführte Prozessgas zu filtern und Pyrolyse- bzw. Vergasungs-Rückstände, insbesondere Kohlepartikel, aus dem heißen Prozessgas auszuscheiden. Die Filtriereinrichtung ist dazu eingerichtet, das gefilterte Prozessgas mittels einer Gasleitung 15 an die Gaswäscheeinrichtung 7 zu leiten. Die Leitung 15 erfüllt vorzugsweise dieselben Anforderungen wie die Leitung 13.

Die Pyrolyseeinrichtung 3 und die Filtriereinrichtung 5 sind vorzugsweise mit einer Sammelleitung 27 verbunden, welche dazu eingerichtet ist, aus der Pyrolyseeinrichtung 3 ausgetriebene und von der Filtriereinrichtung 5 abgeschiedene Pyrolyse-Rückstände, insbesondere Kohlepartikel, zu sammeln und unter Unterdruckbeaufschlagung abzuführen. Vorzugsweise sind in oder an der Sammelleitung 27 Mittel zum Kompaktieren der gesammelten Pyrolyse- bzw. Vergasungs-Rückstände vorgesehen,

Die Gaswäscheeinrichtung 7 ist dazu eingerichtet, das von der Leitung 15 zugeführte Prozessgas von Prozessgas-Kondensat zu reinigen. Vorzugsweise erfolgt dies, indem ein Waschmedium, angedeutet durch Bezugszeichen 16, welches vorzugsweise Pflanzenöl ist, zu- und abgeführt wird, beispielsweise mittels Eindüsen, und das in der Gaswäscheeinrichtung oder bereits vorab in einer (nicht dargestellten) Wärmetauschereinrichtung mittels Abkühlung entstehende Prozessgas-Kondensat auszuwaschen. Die Gaswäscheeinrichtung 7 und die Pyrolyse- bzw. Vergasungseinrichtung 3 sind mittels einer Kondensatleitung 19 verbunden, welche zum rückführen des ausgewaschenen Kondensats in den Reaktor der Pyrolyse- bzw. Vergasungseinrichtung vorzunehmen. Die Gaswäscheeinrichtung 7 weist vorzugsweise Mittel zur Abkühlung des Prozessgases auf, beispielsweise Wärmetauscher, deren Wärme mittels einer Abwärme-Leitung 23 abgeführt werden kann.

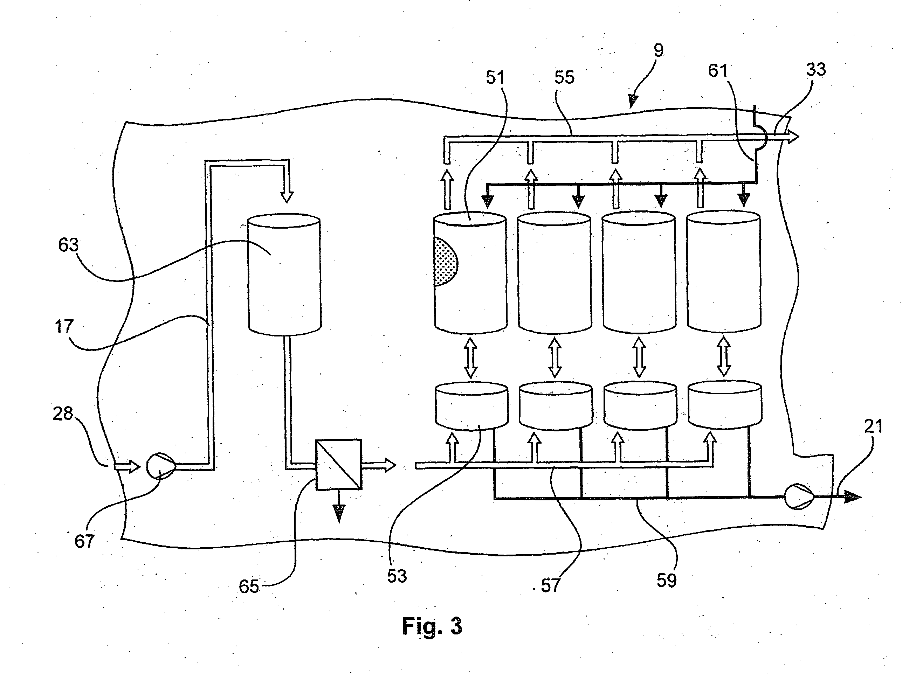

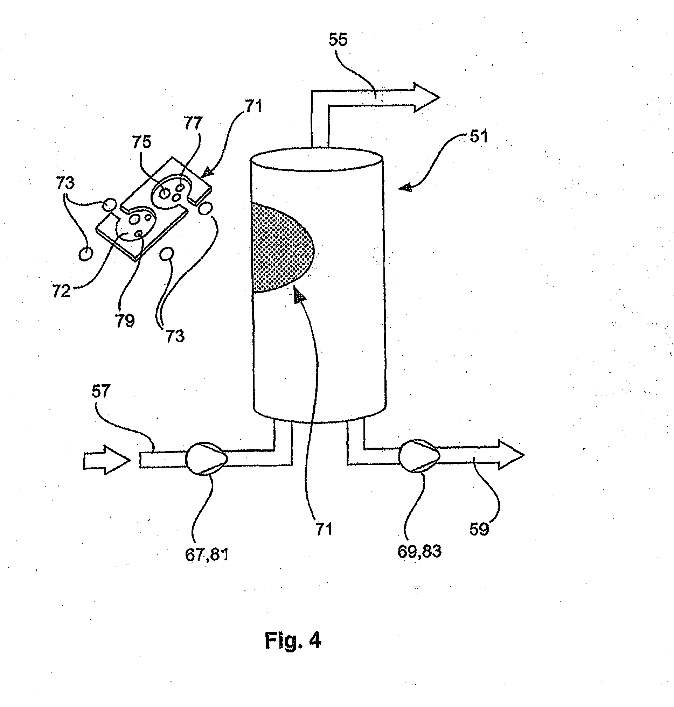

Die Gaswäscheeinrichtung 7 ist mittels einer Leitung 17 mit der Separatoreinrichtung 9 verbunden, wobei die Leitung 17 dazu eingerichtet ist, das von der Gaswäscheeinrichtung 7 gewaschene und abgegebene Prozessgas in Restgas und methanreiches Gas zu separieren. Die Separatoreinrichtung 9 wird anhand einer bevorzugten Ausführungsform auch in den Figuren 3 und 4 näher erläutert. Vorzugsweise ist die Separatoreinrichtung 9 ebenfalls mit der Abwärmeleitung 23, oder einer zusätzlichen Abwärmeleitung verbunden, um in der Separatoreinrichtung noch anfallende und über Wärmetauscher aus dem Prozessgas abgeführte Wärmeenergie abgeführt und nutzbar gemacht werden kann. Die Separatoreinrichtung 9 ist mittels einer Leitung 21 mit dem Blockheizkraftwerk 11 verbunden. Die Leitung 21 ist dazu eingerichtet, das nach dem Abscheiden von Methan aus dem Prozessgas verbleibende Restgas dem Bockheizkraftwerk 11 zur Erzeugung von Strom und Wärme zuzuführen. Die Separatoreinrichtung 9 ist zudem mittels einer Anschlussleitung 33 verbunden, welche dazu eingerichtet ist, das aus dem Prozessgas abgeschiedene Methan abzuführen und wahlweise zu speichern (beispielsweise in Tanks) oder in ein Methan-Versorgungsnetz einzuspeisen.

Das Blockheizkraftwerk 11 ist dazu eingerichtet, das von der Separatoreinrichtung 9 mittels der Leitung 21 zugeführte Restgas zur Erzeugung von Strom und/oder Wärmeenergie zu verwerten, beispielsweise mittels eines oder mehrerer Verbrennungsmotoren oder einer oder mehrerer Turbinen. Die Abfuhr der in dem Blockheizkraftwerk 11 erzeugten Wärmeenergie ist durch Pfeil 31 angedeutet, der von dem Blockheizkraftwerk erzeugte Strom, welcher zur Einspeisung oder Speicherung abgeführt wird, ist durch Pfeil 29 angedeutet. Vorzugsweise ist der durch Pfeil 29 angedeutete Strom überflüssig zu jenem Strom vorhanden, welcher von dem Blockheizkraftwerk 11 als Heizstrom der Pyrolyseeinrichtung 3 zugeführt wird. Dies ist durch Stromleitung 25 angedeutet. Diese Ausführungsform ist insbesondere dann vorteilhaft, wenn als Heizmittel für den Reaktor der Pyrolyseeinrichtung 3 die elektrische Widerstandsheizung vorgesehen ist. Das erfindungsgemäße Verfahren kann anhand Figur 1 ebenfalls erläutert werden. Bereitgestellte Biomasse wird (angedeutet durch Pfeil 28) vorzugsweise kompaktiert und dem Reaktor der Pyrolyseeinrichtung 3 zugeführt. Es können hierbei in zerkleinerter Form eingebrachte Biomassen (beispielsweise aus Waldholz, Sägespäne, Sägemehl, oder Hackschnitzel) in den Reaktor eingeführt werden. Alternativ können auch andere biogene Energieträger unterschiedlicher Korngrößen eingeführt werden, beispielsweise: Grünschnitt, Gärreste, Getreideausputz, Rapspresskuchen, Palmölpresskuchen, Haferschalen, Reisspelzen, Kakaoschalen, Hühnerkot, Klärschlamm, Siebunterlauf/Fermentationsprodukte, oder organische Produktionsreste, sowie Mischungen aus unterschiedlichen festen und flüssigen (beispielsweise mit Pflanzenöl versetzten) Roh- und Reststoffen.

In dem Reaktor der Pyrolyseeinrichtung 3 wird die eingeführte Biomasse vorzugsweise unter Sauerstoffabschluss und Unterdruckbeaufschlagung bei hohen Prozesstemperaturen (siehe die obigen Ausführungen) vergast. Falls die Feuchtigkeit der eingeführten Biomasse für eine effiziente Vergasung zu niedrig ist, wird, wie durch Pfeil 45 angedeutet, Wasser oder Wasserdampf in den Reaktor der Pyrolyseeinrichtung 3 eingeführt. Alternativ können auch aus einer externen Quelle Wasser, Wasserdampf, Öle und/oder Fette in den Reaktor eingespeist werden. Die eingeführte Biomasse wird unter Wärmezufuhr in der Pyrolyseeinrichtung 3 vergast und als Prozessgas mittels der Leitung 13 von der Pyrolyseeinrichtung 3 in die stromabwärts angeordnete Filtriereinrichtung 5 eingeführt. In der Filtriereinrichtung 5 wird eine Vorreinigung des noch heißen Prozessgases direkt nach dem Austritt aus dem Reaktor der Pyrolyseeinrichtung 3 vorgenommen. In der Filtriereinrichtung 5 wird das Prozessgas durch Filterelemente, vorzugsweise Filterkerzen, gefördert. Dabei werden im Prozessgas vorhandene Pyrolyse- bzw. Vergasungs-Rückstände, die insbesondere in Staubform vorhanden sind, aus dem Prozessgas abgeschieden. Die abgeschiedenen Rückstände werden vorzugsweise zu einer Sammelleitung 27 hin abgefördert. Bei zunehmendem Druckverlust, der insbesondere auftritt, wenn die Filterelemente zunehmend mit Pyrolyse- bzw. Vergasungs-Rückständen zugesetzt werden, erfolgt vorzugsweise eine Rückspülung durch die Filterelemente mit bereits gereinigtem Pyrolyse- bzw. Vergasungs-Gas um die Filterelemente zu reinigen. Die Verwendung von bereits gereinigtem Pyrolyse- bzw. Vergasungs-Gas ist deswegen vorteilhaft, weil kein externes Gas, beispielsweise Fremdgase wie insbesondere Inertgase in den Prozess eingeführt werden müssen. Die Rückspülung wird vorzugsweise periodisch wiederholt.

Im Anschluss an den Durchlauf der Filtriereinrichtung wird das Prozessgas mittels der Leitung 15 in einem Wärmetauscher und in die Gaswäscheeinrichtung 7, mit welcher der Wärmetauscher gekoppelt sein kann, oder in welche der Wärmetauscher integriert sein kann, eingeleitet. Das Prozessgas wird einstufig oder mehrstufig mittels Wärmeauskopplung abgekühlt. Im Anschluss an die Abkühlung wird das Waschmedium, vorzugsweise Pflanzenöl, besonders bevorzugt Rapsöl, eingedüst um das Prozessgas-Kondensat, das insbesondere in Form von Teerbestandteilen des Prozessgases vorliegt, auszuwaschen. Erforderlichenfalls wird sodann die Temperatur mittels eines weiteren Kühlkreislaufs erneut gesenkt, vorzugsweise auf eine Temperatur in einem Bereich von 30° bis 40° C. Hierdurch wird eine erneute Kondensation verbleibender störender Bestandteile des Prozessgases erreicht. Das in der Gaswäscheeinrichtung ausgewaschene Prozessgas-Kondensat wird vorzugsweise mittels der Kondensatleitung 19 in den Reaktor der Pyrolyse- bzw. Vergasungseinrichtung 3 rückgeführt und in einem erneuten Durchlauf durch den Reaktor der Pyrolyseeinrichtung 3 erneut vergast. Das gewaschene Prozessgas wird sodann mittels der Leitung 17 der Separatoreinrichtung 9 zugeführt. Die in der Separatoreinrichtung 9 anfallenden Verfahrensschritte sind im Einzelnen auch im Zusammenhang mit den nachstehenden Figuren 3 und 4 erläutert. Von der Separatoreinrichtung 9 abgeschiedenes Methan wird mittels der Leitung 33 zur Speicherung oder Einspeisung abgeführt. Das nach dem Abschalten von Methan aus dem Prozessgas noch verbleibende Restgas wird mittels Leitung 21 dem Blockheizkraftwerk 11 zugeführt, wo es in bekannter Weise zu Strom und Wärme umgesetzt wird. Zusätzlich zu dem zur Speicherung oder Einspeisung abgeführten Strom (Bezugszeichen 29) wird sogenannter Heizstrom erzeugt und mittels Stromleitung 25 zu dem Reaktor der Pyrolyseeinrichtung 3 geleitet.

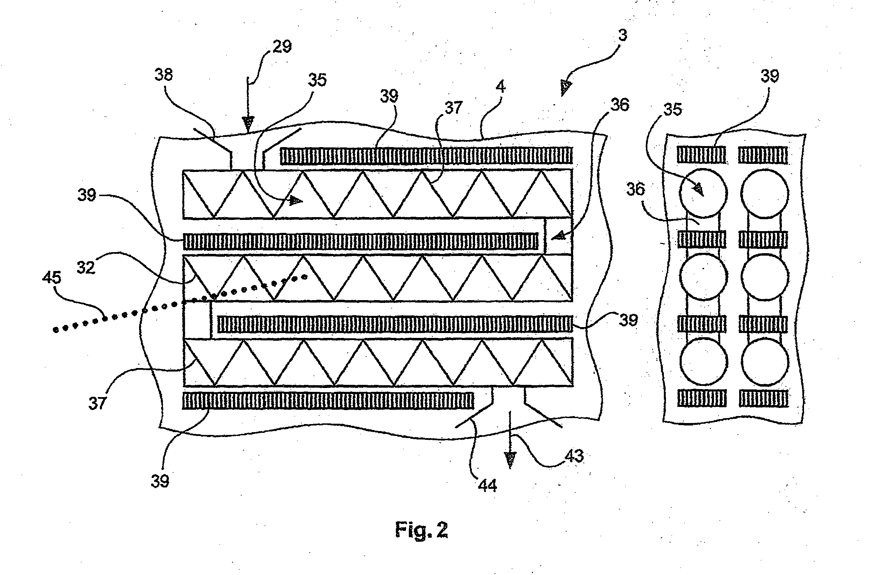

Figur 2 zeigt eine schematische Darstellung des Reaktors der Pyrolyseeinrichtung gemäß einer bevorzugten Ausführungsform der Erfindung. Die Pyrolyse- bzw. Vergasungseinrichtung 3 weist einen Reaktor 4 auf. In Figur 2 auf der linken Seite ist eine Schnittdarstellung in einer ersten seitlichen Orientierung gezeigt, und in Figur 2 rechts ist eine Schnittdarstellung orthogonal zu der ersten, links dargestellten Orientierung abgebildet. Der Reaktor 4 weist in dem gezeigten Ausführungsbeispiel sich parallel erstreckende, mäanderförmig ausgebildete Reaktorkammern 35 auf, die jeweils zylindrische Abschnitte zur Aufnahme von Förderschnecken 37 sowie sich zwischen den zylindrischen Abschnitten erstreckende Übergangsabschnitte 36 auf. Die Pyrolyseeinrichtung 3 weist eine Einführungsöffnung 38 zur Zufuhr von Biomasse, angedeutet durch Pfeil 28, sowie eine Ausfuhröffnung 44 zum Austragen von Pyrolyse- bzw. Vergasungs-Rückständen auf, angedeutet durch Bezugszeichen 43. Durch einen entsprechend synchronisierten Betrieb der mehreren Förderschnecken 37 wird die eingeführte Biomasse von der Einführöffnung 38 in Richtung der Ausfuhröffnung 44 kontinuierlich gefördert. Die Pyrolyseeinrichtung 3 weist eine indirekte Heizeinrichtung auf, welche ihrerseits mehrere außerhalb der Reaktorkammer angeordnete Heizelemente 39 aufweist. Die Heizelemente 39 erstrecken sich entlang der zylindrischen Abschnitte der Reaktorkammer. Die Reaktorkammer weist eine (nicht dargestellte) Zuführeinrichtung zum Einführen von Wasser oder Wasserdampf, angedeutet durch Bezugszeichen 45, auf. Weiterhin weist die Pyrolyseeinrichtung 3 eine (nicht dargestellte) Vakuum-Einheit zum Absaugen des in der Reaktorkammer entstehenden Prozessgases auf. Vorzugsweise ist die Vakuumeinrichtung derart angeordnet, dass das entstehende Gas im Gleichstrom zu der Förderrichtung der Biomasse durch den Reaktor 4 hindurch strömt.

Wie sich aus dem rechten Teil von Figur 2 ergibt, ist der Reaktor 4 als zweizügiger Reaktor mit zwei parallelen Reaktorkammern ausgebildet. Optional können je nach Größe der Vorrichtung und des Prozessgas-Bedarfs auch weitere Reaktoren zusätzlich parallel angeordnet sein.

In dem erfindungsgemäßen Verfahren wird Biomasse in die Kammer des Reaktors 4 durch eine Einführöffnung 38 hindurch eingeführt, vorzugsweise bereits kompaktiert. In der Kammer des Reaktors 4 wird die Biomasse mittels der Förderschnecken 37 kontinuierlich gefördert, wobei die Förderrate eine Funktion der zur Vergasung der Biomasse erforderlichen Verweilzeit in dem Reaktor ist. Erforderlichenfalls wird bei zu geringer Feuchte der Biomasse Wasser oder Wasserdampf in die Kammer des Reaktors 4 eingespeist, beispielsweise in dem Bereich der in Figur 2 mittig dargestellten Förderschnecken 37. Dies ist auch durch die gepunktete Linie 45 angedeutet. Durch Zufuhr von Wärme mittels der Heizelemente 39 wird die Biomasse allotherm vergast bei Temperaturen im Bereich von vorzugsweise oberhalb 830° C. Das erzeugte Prozessgas durchströmt die Kammer des Reaktors 4 und wird abgesaugt, wobei es vorzugsweise die Kammer des Reaktors 4 im Gleichstrom durchläuft. Die aus der Pyrolyse verbleibenden Pyrolyse-Rückstände, insbesondere Kohlepartikel, werden am Ende des Förderwegs in der Kammer des Reaktors 4 mittels der in Figur 2 unteren Förderschnecken 37 aus der Ausfuhröffnung 44 ausgetrieben und vorzugsweise einer Sammelleitung (siehe Figur 1) zugeführt.

Figur 3 zeigt den schematischen Aufbau einer Separatoreinrichtung 9 der erfindungsgemäßen Vorrichtung gemäß einer bevorzugten Ausführungsform. Die Separatoreinrichtung 9 weist eine oder mehrere, gezeigt sind vier, Adsorptions-Filtereinheiten 51 auf, von denen der Übersichtlichkeit halber lediglich eine mit Bezugszeichen versehen ist. Die Adsorptions-Filtereinheiten 51 sind zur Aufnahme von Prozessgas aus einer Verteilerleitung 57 angepasst. Zwischen der Verteilerleitung 57 und den Adsorption-Filtereinhelten 51 sind jeweils Vorfilter 53 zwischengeschaltet, die vorzugsweise als Aktivkohlefilter ausgebildet sind. Die Adsorptions-Filtereinheiten sind dazu ausgebildet, mittels Druckwechsel-Absorption Methan aus dem Prozessgas abzuscheiden und separat von dem nach dem Abscheiden verbleibenden Restgas abzugeben. Die Separatoreinheit 9 weist zum Sammeln und Abführen des abgeschiedenen Methans eine Sammelleitung 55 auf. Weiterhin weist die Separatoreinrichtung 9 vorzugsweise eine Verteilerleitung 61 zum Zuführen von Spülgas in die Adsorptions-Filtereinheiten 51 auf. Die Vorfilter 53 und die Adsorptions-Filtereinheiten 51 sind fluidleitend miteinander verbunden und mittels einer Sammelleitung 59 mit einer Vakuumpumpe 69 verbunden, welche zum Absaugen des Restgases aus den Adsorptions-Filtereinheiten 51 und zuführend zu der Leitung 21 ausgebildet ist. Stromaufwärts von den Adsorptions-Filtereinheiten ist ein Schwefelwasserstoff-Filter 63 im Leitungsweg angeordnet. Vorzugsweise wird von der Leitung 17 kommend mittels eine Verdichters 67 druckbeaufschlagtes Prozessgas durch den Schwefelwasserstoff-Filter 63 gefördert. Zwischen dem Schwefelwasserstroff-Filter 63 und den Adsorptions-Filtereinheiten 51 ist vorzugsweise weiterhin ein Konditionierer 65 angeordnet, der zum Justieren der Prozessgas-Temperatur und zur Abfuhr von Kondensat eingerichtet ist.

Eine nähere Betrachtung der Adsorptions-Filtereinheit 51 ist in Figur 4 vorgesehen. Die Adsorptions-Filtereinheit 51 gemäß Figur 3 und 4 ist fluidleitend mit der Verteilerleitung 57, der Sammelleitung 55 und der Sammelleitung 59 verbunden. Die Adsorptions-Filtereinheit 51 weist ein Kohlenstoffsieb 71 auf, welches vorzugsweise als Kohlenstoffmolekularsieb (CMS) ausgebildet ist. Das Kohlenstoffsieb 71 weist eine Vielzahl Kavitäten 72 auf. Die Kavitäten sind dazu angepasst, niedermolekulare Bestandteile des Prozessgases, wie beispielsweise Stickstoff- oder Sauerstoffmoleküle 75, Wasser oder Schwefelwasserstoff-Moleküle 77 oder Kohlenstoffdioxid-Moleküle 79 unter Überdruckbeaufschlagung aufzunehmen. Die Membran ist zudem dazu angepasst, den Kavitäten den Eintritt von Methan-Molekülen 73 auch bei Überdruckbeaufschlagung zu versperren.

Die Adsorptions-Filtereinheit 51 und das darin befindliche Prozessgas sind mittels eines Verdichters 81, der alternativ auch der Verdichter 67 (siehe Figur 3) sein kann, mit Überdruck beaufschlagbar. In dem Strömungsweg zu Leitung 59 ist eine Vakuumpumpe 83 angeordnet, die auch die Vakuumpumpe 69 gemäß Figur 3 sein kann, und zur Erzeugung eines Unterdrucks in der Adsorptions-Filtereinheit ausgebildet.

Das Verfahren der Separation von Methan aus dem Prozessgas vollzieht sich wie folgt: Bei Überdruckbeaufschlagung werden die niedermolekularen Bestandteile des Prozessgases, insbesondere die Moleküle 75, 77, 79 in die Kavitäten des Kohlenstoffsiebes 71 verdrängt und dort adsorbiert, während die Methan-Moleküle 73 die Adsorptions-Filtereinheit 51 durch die Sammelleitung 55 verlassen. Dieses wird als erster Zyklus bezeichnet. In einem zweiten Zyklus wird mittels der Vakuumpumpe 83 oder 69 ein Unterdruck erzeugt. Als Folge hiervon werden die niedermolekularen Bestandteile, insbesondere die Moleküle 75, 77, 79 aus den Kavitäten 72 des Kohlenstoffsiebe 71 freigesetzt und in Richtung der Sammelleitung 59 abgesaugt. Bei entsprechend zeitlich versetztem Betrieb mehrerer Adsorptions-Filtereinheiten 51 schließen sich die Zyklen der jeweiligen Adsorptions-Filtereinheiten so aneinander an, dass ein quasi kontinuierlicher Betrieb und ein quasi kontinuierliches Abführen von sowohl dem Restgas als auch dem methanreichen Gas erreicht werden.

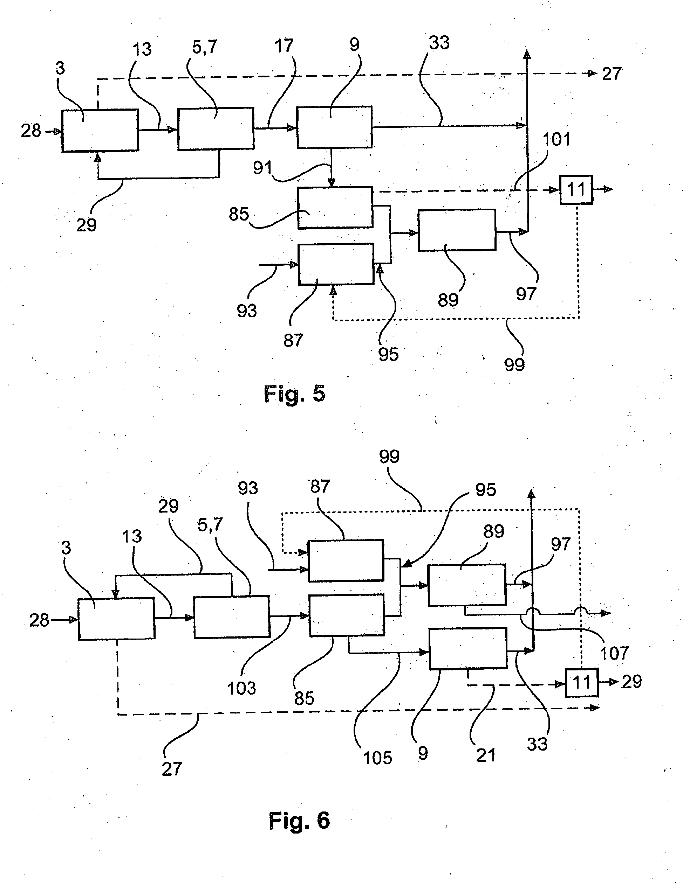

In Figur 5 ist eine bevorzugte Ausgestaltung der erfindungsgemäßen Vorrichtung schematisch dargestellt. Die in Figur 5 gezeigte Vorrichtung entspricht bezüglich der Anordnung der Pyrolyse- bzw. Vergasungseinrichtung 3, der Filtriereinrichtung 5 und der Gaswäscheeinrichtung 7 im Wesentlichen der in Figur 1 gezeigten Vorrichtung. Insoweit wird bezüglich identischer Bezugszeichen auf die vorstehenden Ausführungen verwiesen. In Abweichung zu der in Figur 1 gezeigten Vorrichtung ist stromabwärts von der Separatoreinrichtung 9 mittels einer Leitung 91 ein Wasserstoff-Separator 85 vorgesehen und fluidleitend mit der Separatoreinrichtung 9 verbunden. Der Wasserstoff-Separator 85 ist zum Abscheiden von Wasserstoff aus dem von der Separatoreinrichtung 9 abgegebenen Restgas eingerichtet. Der Wasserstoff-Separator 85 ist Teil einer Reaktionseinrichtung 95 zur Durchführung eines Sabatier-Prozesses, welche Teil der Mittel zur Methanisierung ist. Die Reaktionseinrichtung 95 weist weiterhin einen Kohlenstoffdioxid-Separator 87 auf. Der Kohlenstoffdioxid-Separator 87 ist dazu einrichtet, ihm zugeführte Luft (angedeutet durch Bezugszeichen 93) zu verarbeiten und Kohlenstoffdioxid aus ihr abzuscheiden. Optional wird in dem Kohlenstoffdioxid-Separator 87 zusätzlich mittels Leitung 99 von dem Blockheizkraftwerk 11 zugeführtes Abgas zum Abscheiden von Kohlenstoffdioxid verarbeitet.

Das von dem Wasserstoff-Separator 85 nach Abscheiden des Wasserstoffs verbleibende Restgas wird mittels Leitung 101 dem Blockheizkraftwerk 11 zugeleitet. Der von dem Wasserstoff-Separator 85 abgeschiedene Wasserstoff und das von dem Kohlenstoffdioxid-Separator 87 abgeschiedene Kohlenstoffdioxid werden in einer Reaktionskammer 89 der Reaktionseinrichtung 95 zusammengeführt und reagieren dort in der Sabatier-Reaktion zu Methan und Wasser. Das Wasser wird (in nicht dargestellter Weise) aus der Reaktionskammer abgeführt und optional einem Wasserkreislauf zur Verfügung gestellt. Die Reaktionseinrichtung ist zudem dazu eingerichtet, das erzeugte Methan mittels einer Leitung 97 einem Versorgungsnetz oder Speichermitteln zur Verfügung zu stellen.

In Figur 6 ist ebenfalls eine erfindungsgemäße Vorrichtung gemäß einer bevorzugten Ausführungsform dargestellt, die eine Reaktionseinrichtung zum Durchführen des Sabatier-Prozesses aufweist. Im Unterschied zu der in Figur 5 gezeigten Vorrichtung ist die Reaktionseinrichtung 95 an anderer Stelle angeordnet. Prozessgas wird nach dem Durchlaufen der Gaswäscheeinrichtung 7 mittels einer Leitung 103 dem Wasserstoff-Separator 85 der Reaktionseinrichtung 95 zugeführt. Parallel wird Luft (angedeutet durch Bezugszeichen 93) dem Kohlenstoffdioxid-Separator 87 zugeführt, sowie optional Abgas von dem Blockheizkraftwerk 11 mittels Leitung 99. Der Wasserstoff-Separator 85 ist so im Prozessstrom angeordnet, dass das von ihm verarbeitete Prozessgas nach dem Abscheiden von Wasserstoff mittels einer Leitung 105 der Separatoreinrichtung 9 zugeführt wird.

Die Reaktionskammer 89 der Reaktionseinrichtung 95 zur Durchführung des Sabatier-Prozesses ist stromabwärts des Wasserstoff-Separators 85 und des Kohlenstoffdioxid-Separators 87 angeordnet. Somit sind die Separatoreinrichtung 9 und die Reaktionskammer 89 der Reaktionseinrichtung 95 gewissermaßen parallel angeordnet.

In Figur 6 ist zudem durch Leitung 107 der Abtransport des in der Reaktionskammer 89 gewonnenen Wassers angedeutet.

Die bevorzugten Ausführungsformen der Figuren 5 und 6 lassen sich alternativ betreiben, indem anstelle des Wasserstoff-Separators 85 ein (nicht dargestellter) Anschluss zum Zuführen von Wasserstoff bereitgestellt wird. Diesem Anschluss wird erfindungsgemäß in einer alternativen Ausführungsform mittels Elektrolyse gewonnener Wasserstoff zugeführt. Vorzugsweise erfolgt die Elektrolyse mittels Stromzufuhr aus dem Blockheizkraftwerk 11 oder mittels externer Energiequellen, wie beispielsweise einer Windenergieanlage.

## Patentansprüche

1. Vorrichtung zur Energiegewinnung aus Biomasse, mit einer Pyrolyseeinrichtung (3) zur Gewinnung eines Prozessgases aus der Biomasse,
einem Blockheizkraftwerk (11) zur Gewinnung von Wärmeenergie und/oder elektrischer Energie aus mindestens einem Teil des Prozessgases,
**gekennzeichnet durch** eine Separatoreinrichtung (9), welche dazu eingerichtet ist, aus dem Prozessgas Methan vollständig abzuscheiden, wobei die Vorrichtung dazu angepasst ist, dem Blockheizkraftwerk (11) zum Zweck der Energiegewinnung ein nach vollständiger Abscheidung von Methan aus dem Prozessgas verbleibendes Restgas zuzuführen.

2. Vorrichtung nach Anspruch 1,
**gekennzeichnet durch** Mittel zur Speicherung des abgeschiedenen Methans, und/oder
eine Einrichtung zur Einspeisung des abgeschiedenen Methans in ein Methan-Versorgungsnetz.

3. Vorrichtung nach Anspruch 1 oder 2,
**dadurch gekennzeichnet, dass** die Pyrolyseeinrichtung (3) einen Reaktor (4) aufweist, innerhalb dessen ein oder mehrere Förderelemente, insbesondere Förderschnecken (37), zum Vortrieb der eingeführten Biomasse vorgesehen sind, sowie ein oder mehrere Förderelemente, insbesondere Förderschnecken (37), zum Austrieb von Pyrolyse-Rückständen, insbesondere Kohlepartikeln, aus dem Reaktor (4).

4. Vorrichtung nach einem der vorstehenden Ansprüche,
**dadurch gekennzeichnet, dass** die Pyrolyseeinrichtung (3) dazu eingerichtet ist, eine allotherme Vergasung der Biomasse durchzuführen, und zu diesem Zweck Mittel zur, vorzugsweise indirekten, Wärmezufuhr in den Reaktor (4) aufweist.

5. Vorrichtung nach einem der vorstehenden Ansprüche,
**gekennzeichnet durch** eine Filtriereinrichtung (5) zum Abscheiden von Pyrolyse- bzw. Vergasungs-Rückständen, insbesondere Kohlepartikeln, aus dem mittels der Pyrolyse- bzw. Vergasungseinrichtung (3) erzeugten Prozessgas, welche stromabwärts der Pyrolyse- bzw. Vergasungseinrichtung (3) vorgesehen ist.

6. Vorrichtung nach einem der vorstehenden Ansprüche,
**gekennzeichnet durch** eine Gaswäscheeinrichtung (7) zum Abscheiden von Prozessgas-Kondensat aus dem Prozessgas.

7. Vorrichtung nach Anspruch 6,
**dadurch gekennzeichnet, dass** zwischen der Filtriereinrichtung (5) und der Gaswäscheeinrichtung (7) ein Wärmetauscher zur Abkühlung des von der Pyrolyse- bzw. Vergasungseinrichtung (3) in Richtung der Filtriereinrichtung (5) abgegebenen Prozessgases angeordnet ist.

8. Vorrichtung nach einem der vorstehenden Ansprüche,
**gekennzeichnet durch** eine Sammeleinrichtung, welche dazu angepasst ist, die aus dem Reaktor (4) der Pyrolyse- bzw. Vergasungseinrichtung (3) ausgetriebenen, und/oder die in der Filtriereinrichtung gesammelten Pyrolyse- bzw. Vergasungs-Rückstände, insbesondere Kohlepartikel, zu sammeln und zur Abfuhr bereitzustellen.

9. Vorrichtung nach einem der vorstehenden Ansprüche,
**dadurch gekennzeichnet, dass** die Vorrichtung, vorzugsweise die Separatoreinrichtung (9), zum Zweck des Abscheidens von Methan aus dem Prozessgas eine oder mehrere selektiv mit Überdruck oder Unterdruck beaufschlagbare Adsorptions-Filtereinheiten (51) aufweist, wobei die Adsorptions-Filtereinheit (51) oder die Adsorptions-Filtereinheiten (51) dazu angepasst sind, bei Überdruckbeaufschlagung niedermolekulare Bestandteile des der Separatoreinrichtung (9) zugeführten Prozessgases zu adsorbieren, und
dass die Separatoreinrichtung (9) Mittel zum Abführen des nicht adsorbierten Teils des Prozessgases aufweist.

10. Vorrichtung nach einem der vorstehenden Ansprüche,
**gekennzeichnet durch** Mittel zur Methanisierung des Restgases und/oder des Prozessgases unter Verwendung eines Katalysators.

11. Verfahren zur Energiegewinnung aus Biomasse, umfassend die Schritte:
- Gewinnen eines Prozessgases aus der Biomasse mittels einer Pyrolyse- bzw. Vergasungseinrichtung (3),
- Gewinnen von Wärmeenergie und elektrischer Energie aus mindestens einem Teil des Prozessgases mittels eines Blockheizkraftwerkes (11), **gekennzeichnet durch** die Schritte:
- vollständiges Abscheiden von Methan aus dem Prozessgas mittels einer Separatoreinrichtung (9), und
- Zuführen eines nach dem vollständigen Abscheiden von Methan aus dem Prozessgas verbleibenden Restgases zu dem Blockheizkraftwerk (11) zum Zweck der Energiegewinnung.

12. Verfahren nach Anspruch 11, umfassend einen, mehrere oder sämtliche der Schritte:
- Verdichten der Biomasse,
- Fördern der Biomasse in und durch einen Reaktor (4) der Pyrolyseeinrichtung (3),
- Unterdruckbeaufschlagung des Reaktors (4),
- Zuführen von Wasser oder Wasserdampf in den Reaktor (4),
- Zuführen von Wärme, vorzugsweise indirekt, zum allothermen Vergasen der Biomasse, und
- Austreiben von Pyrolyse- bzw. Vergasungs-Rückständen, insbesondere Kohlepartikeln, aus dem Reaktor (4).

13. Verfahren nach einem der Ansprüche 11 und 12, umfassend:
- Abscheiden von Pyrolyse- bzw. Vergasungs-Rückständen, insbesondere Kohlepartikeln, aus dem mittels der Pyrolyse- bzw. Vergasungseinrichtung erzeugten Prozessgas, und/oder
- Sammeln der von dem Filterelement oder den Filterelementen abgeschiedenen Pyrolyse- bzw. Vergasungs-Rückstände.

14. Verfahren nach einem der Ansprüche 11 bis 13, umfassend einen, mehrere oder sämtliche der Schritte:
- Abscheiden von Prozessgas-Kondensat aus dem Prozessgas,
- Abkühlen des von der Pyrolyse- bzw. Vergasungseinrichtung (3) in Richtung der Filtriereinrichtung (5) angegebenen Prozessgases,
- Abführen der Wärmeenergie und Bereitstellung für Speicherung oder Nutzung,
- Spülen des Prozessgases, vorzugsweise mittels Pflanzenöl, und
- Rückführen des abgeschiedenen Prozessgas-Kondensats in die Pyrolyseeinrichtung (3).

15. Verfahren nach einem der Ansprüche 11 bis 14, umfassend einen, mehrere oder sämtliche der Schritte:
- Sammeln der aus dem Reaktor (4) der Pyrolyse- bzw. Vergasungseinrichtung (3) ausgetriebenen Pyrolyse- bzw. Vergasungs-Rückstände, insbesondere Kohlepartikel,
- Sammeln der in der Filtriereinrichtung (5) gesammelten Pyrolyse- bzw. Vergasungs-Rückstände, insbesondere Kohlepartikel,
- Bereitstellen der gesammelten Pyrolyse- bzw. Vergasungs-Rückstände zur Abfuhr, und
- Kompaktieren der gesammelten Pyrolyse- bzw. Vergasungs-Rückstände.

16. Verfahren nach einem der Ansprüche 11 bis 15,
umfassend einen, mehrere oder sämtliche der Schritte:
- selektives Beaufschlagen einer oder mehrerer Adsorptions-Filtereinheiten (51) der Separatoreinrichtung (9) mit Überdruck, wobei niedermolekulare Bestandteile des der Separatoreinrichtung (9) zugeführten Prozessgases adsorbiert werden,
- selektives Beaufschlagen der einen oder mehreren Adsorptions-Filtereinheiten (51) der Separatoreinrichtung (9) mit Unterdruck, wobei die zuvor adsorbierten niedermolekularen Bestandteile des der Separatoreinrichtung (9) zugeführten Prozessgases freigegeben werden,
- Abführen des nicht adsorbierten Teils des Prozessgases aus der Separatoreinrichtung (9), und
- Abführen der freigegebenen niedermolekularen Bestandteile des der Separatoreinrichtung (9) zugeführten Prozessgases als Restgas aus der Separatoreinrichtung (9) in Richtung des Blockheizkraftwerkes (11).

17. Verfahren nach einem der Ansprüche 11 bis 16,
umfassend:
- Methanisierung des Restgases und/oder des Prozessgases unter Verwendung eines Katalysators.

## Claims

1. Device for extracting energy from biomass, having
a pyrolysis device (3) for extracting a process gas from the biomass,
a block heating power station (11) for extracting thermal energy and/or electrical energy from at least a portion of the process gas,
**characterised by** a separation device (9) which is configured to separate methane completely from the process gas, the device being adapted to supply to the block heating power station (11) for the purposes of energy extraction a residual gas which remains after complete separation of methane from the process gas.

2. Device according to claim 1,
**characterised by** means for storing the separated methane, and/or
a device for supplying the separated methane to a methane supply network.

3. Device according to claim 1 or claim 2,
**characterised in that** the pyrolysis device (3) has a reactor (4) inside which one or more conveying elements, in particular helical conveying members (37), are provided to advance the biomass which is introduced, and one or more conveying elements, in particular helical conveying members (37), for discharging pyrolysis residues, in particular carbon particles, from the reactor (4).

4. Device according to any one of the preceding claims,
**characterised in that** the pyrolysis device (3) is configured to carry out an allothermal gasification of the biomass, and for this purpose has means for, preferably indirectly, supplying heat to the reactor (4).

5. Device according to any one of the preceding claims,
**characterised by** a filtering device (5) for separating pyrolysis or gasification residues, in particular carbon particles, from the process gas which is produced by means of the pyrolysis or gasification device (3) and which is provided downstream of the pyrolysis or gasification device (3).

6. Device according to any one of the preceding claims,
**characterised by** a gas washing device (7) for separating process gas condensate from the process gas.

7. Device according to claim 6,
**characterised in that** there is arranged between the filter device (5) and the gas washing device (7) a heat exchanger for cooling the process gas which is discharged from the pyrolysis or gasification device (3) in the direction of the filter device (5).

8. Device according to any one of the preceding claims,
**characterised by** a collection device which is adapted to collect the pyrolysis or gasification residues, in particular carbon particles, which are discharged from the reactor (4) of the pyrolysis or gasification device (3) and/or which have accumulated in the filter device and to prepare them for discharge.

9. Device according to any one of the preceding claims,
**characterised in that** the device, preferably the separator device (9), for the purposes of separating methane from the process gas, has one or more adsorption filter units (51) which can be selectively acted on with excess pressure or reduced pressure, the adsorption filter unit (51) or the adsorption filter units (51) being adapted to adsorb low-molecular components of the process gas supplied to the separator device (9) when acted on with excess pressure, and **in that** the separator device (9) has means for discharging the non-adsorbed portion of the process gas.

10. Device according to any one of the preceding claims,
**characterised by** means for methanation of the residual gas and/or the process gas using a catalyst.

11. Method for extracting energy from biomass, comprising the steps of:
- extracting a process gas from the biomass using a pyrolysis or gasification device (3),
- extracting thermal energy and electrical energy from at least a portion of the process gas using a block heating power station (11),
**characterised by** the steps of:
- completely separating methane from the process gas using a separator device (9), and
- supplying a residual gas which remains after the methane has been completely separated from the process gas to the block heating power station (11) for the purposes of extracting energy.

12. Method according to claim 11, comprising one, more or all of the steps of:
- compressing the biomass,
- conveying the biomass into and through a reactor (4) of the pyrolysis device (3),
- applying reduced pressure to the reactor (4),
- supplying water or water vapour to the reactor (4),
- supplying heat, preferably indirectly, for allothermic degasification of the biomass, and
- discharging pyrolysis or gasification residues, in particular carbon particles, from the reactor (4).

13. Method according to either claim 11 or claim 12, comprising:
- separating pyrolysis or gasification residues, in particular carbon particles, from the process gas produced by the pyrolysis or gasification device, and/or
- collecting the pyrolysis or gasification residues separated by the filter element or the filter elements.

14. Method according to any one of claims 11 to 13, comprising one, a plurality or all of the steps of:
- separating process gas condensate from the process gas,
- cooling the process gas which is discharged from the pyrolysis or gasification device (3) in the direction of the filter device (5),
- discharging the thermal energy and providing for storage or use,
- rinsing the process gas, preferably using plant oil, and
- returning the separated process gas condensate to the pyrolysis device (3).

15. Method according to any one of claims 11 to 14, comprising one, a plurality or all of the steps of:
- collecting the pyrolysis or gasification residues which are discharged from the reactor (4) of the pyrolysis or gasification device (3), in particular carbon particles,
- collecting the pyrolysis or gasification residues, in particular carbon particles, which have accumulated in the filter device (5),
- providing the accumulated pyrolysis or gasification residues for discharge, and
- compacting the accumulated pyrolysis or gasification residues.

16. Method according to any one of claims 11 to 15, comprising one, a plurality or all of the steps of:
- selectively acting on one or more adsorption filter units (51) of the separator device (9) with excess pressure, low-molecular components of the process gas supplied to the separator device (9) being adsorbed,
- selectively acting on one or more adsorption filter units (51) of the separator device (9) with reduced pressure, the previously adsorbed low-molecular components of the process gas supplied to the separator device (9) being released,
- discharging the non-adsorbed portion of the process gas from the separator device (9), and
- discharging the released low-molecular components of the process gas supplied to the separator device (9) as residual gas from the separator device (9) in the direction of the block heating power station (11).

17. Method according to any one of claims 11 to 16, comprising:
- methanation of the residual gas and/or process gas using a catalyst.

## Revendications

1. Dispositif de production d'énergie à partir de biomasse, avec
un système de pyrolyse (3) pour la production d'un gaz de processus à partir de biomasse,
une centrale thermique en montage-bloc (11) pour la production d'énergie thermique et/ou d'énergie électrique à partir d'au moins une partie du gaz de processus,
**caractérisé par** un système de séparation (9), qui est conçu pour éliminer complètement du méthane dans le gaz de processus, le dispositif étant adapté pour apporter à la centrale thermique en montage-bloc (11) dans le but de la production d'énergie un gaz résiduel restant après l'élimination complète du méthane dans le gaz de processus.

2. Dispositif selon la revendication 1,
**caractérisé par** des moyens de stockage du méthane éliminé
et/ou
un système pour l'alimentation d'un réseau de distribution de méthane avec le méthane éliminé.

3. Dispositif selon la revendication 1 ou 2,
**caractérisé en ce que** le système de pyrolyse (3) comprend un réacteur (4) à l'intérieur duquel sont prévus un ou plusieurs éléments de transport, en particulier des hélices transporteuses (37), pour l'avancement de la biomasse introduite, ainsi qu'un ou plusieurs éléments de transport, en particulier des hélices transporteuses (37), pour le rejet des résidus de la pyrolyse, en particulier des particules de carbone, en dehors du réacteur (4).

4. Dispositif selon l'une quelconque des revendications précédentes,
**caractérisé en ce que** le système de pyrolyse (3) est conçu pour exécuter une gazéification allothermique de la biomasse et **en ce qu'**il comprend, dans ce but, des moyens pour l'apport de chaleur, de préférence indirect, dans le réacteur (4).

5. Dispositif selon l'une quelconque des revendications précédentes,
**caractérisé par** un système de filtrage (5) pour l'élimination de résidus de la pyrolyse ou de la gazéification, en particulier de particules de carbone, dans le gaz de processus, généré au moyen du système de pyrolyse ou de gazéification (3), le système de filtrage étant prévu en aval du système de pyrolyse ou de gazéification (3).

6. Dispositif selon l'une quelconque des revendications précédentes,
**caractérisé par** un système de lavage de gaz (7) pour l'élimination de condensats du gaz de processus dans le gaz de processus.

7. Dispositif selon la revendication 6,
**caractérisé en ce que**, entre le système de filtrage (5) et le système de lavage de gaz (7) est disposé un échangeur de chaleur pour le refroidissement du gaz de processus cédé par le système de pyrolyse ou de gazéification (3) en direction du système de filtrage (5).

8. Dispositif selon l'une quelconque des revendications précédentes,
**caractérisé par** un système de collecte, qui est adapté pour collecter les résidus de la pyrolyse ou de la gazéification, en particulier les particules de carbone, rejetés en dehors du réacteur (4) du système de pyrolyse ou de gazéification (3) et/ou les résidus de la pyrolyse ou de la gazéification, en particulier les particules de carbone, collectés dans le système de filtrage et pour les préparer pour leur évacuation.

9. Dispositif selon l'une quelconque des revendications précédentes, **caractérisé**
**en ce que** le dispositif, de préférence le système de séparation (9), aux fins de l'élimination de méthane dans le gaz de processus, comprend une ou plusieurs unités de filtre d'adsorption (51) auxquelles peut être appliquée de manière sélective une surpression ou une dépression, l'unité de filtre d'adsorption (51) ou les unités de filtre d'adsorption (51) étant adaptées pour, en cas d'application d'une surpression, adsorber des composantes de faible masse moléculaire du gaz de processus apporté au système de séparation (9), et
**en ce que** le système de séparation (9) comprend des moyens pour l'évacuation de la partie non adsorbée du gaz de processus.

10. Dispositif selon l'une quelconque des revendications précédentes,
**caractérisé par** des moyens pour la méthanisation du gaz résiduel et/ou du gaz de processus à l'aide d'un catalyseur.

11. Procédé de production d'énergie à partir de biomasse, comportant les étapes suivantes :
- production d'un gaz de processus à partir de biomasse au moyen d'un système de pyrolyse ou de gazéification (3),
- production d'énergie thermique et d'énergie électrique à partir d'au moins une partie du gaz de processus au moyen d'une centrale thermique en montage-bloc (11),
**caractérisé par** les étapes suivantes :
- élimination complète de méthane dans le gaz de processus au moyen d'un système de séparation (9), et
- apport d'un gaz résiduel restant après l'élimination complète de méthane dans le gaz de processus à la centrale thermique en montage-bloc (11) dans le but de la production d'énergie.

12. Procédé selon la revendication 11, comportant une, plusieurs ou l'intégrité des étapes suivantes :
- compression de la biomasse,
- transport de la biomasse à un réacteur (4) du système de pyrolyse (3) et à travers ledit réacteur,
- application d'une dépression dans le réacteur (4),
- apport d'eau ou de vapeur d'eau dans le réacteur (4),
- apport de chaleur, de préférence de manière indirecte, à la gazéification allothermique de la biomasse, et
- rejet des résidus de la pyrolyse ou de la gazéification, en particulier des particules de carbone, en dehors du réacteur (4).

13. Procédé selon l'une quelconque des revendications 11 et 12, comportant :
- l'élimination de résidus de la pyrolyse ou de la gazéification, en particulier des particules de carbone, dans le gaz de processus généré au moyen du système de pyrolyse ou de gazéification, et/ou
- la collecte des résidus de la pyrolyse ou de la gazéification éliminés par l'élément de filtre ou par les éléments de filtre.

14. Procédé selon l'une quelconque des revendications 11 à 13, comportant une, plusieurs ou l'intégralité des étapes suivantes :
- élimination de condensats du gaz de processus dans le gaz de processus,
- refroidissement du gaz de processus cédé par le système de pyrolyse ou de gazéification (3) en direction du système de filtrage (5),
- évacuation de l'énergie thermique et préparation pour le stockage ou l'utilisation,
- rinçage du gaz de processus, de préférence au moyen d'huile végétale et
- réintroduction des condensats de gaz de processus extraits dans le système de pyrolyse (3).

15. Procédé selon l'une quelconque des revendications 11 à 14, comportant une, plusieurs ou l'intégralité des étapes suivantes :
- collecte des résidus de la pyrolyse ou de la gazéification, en particulier des particules de carbone, évacués en dehors du réacteur (4) du système de pyrolyse ou de gazéification (3),
- collecte des résidus de la pyrolyse ou de la gazéification, en particulier des particules de carbone, collectés dans le système de filtrage (5)
- préparation des résidus collectés de la pyrolyse ou de la gazéification pour leur évacuation, et
- compactage des résidus collectés de la pyrolyse ou de la gazéification.

16. Procédé selon l'une quelconque des revendications 11 à 15,
comportant une, plusieurs ou l'intégralité des étapes suivantes :
- application sélective d'une surpression à une ou plusieurs des unités de filtre d'adsorption (51) du système de séparation (9), des composantes de faible masse moléculaire du gaz de processus apporté au système de séparation (9) étant adsorbées,
- application sélective d'une dépression à une ou plusieurs des unités de filtre d'adsorption (51) du système de séparation (9), les composantes de faible masse moléculaire, adsorbées auparavant, du gaz de processus apporté au système de séparation (9) étant libérées,
- évacuation de la partie non adsorbée du gaz de processus en dehors du système de séparation (9), et
- évacuation des composantes de faible masse moléculaire libérées du gaz de processus amené au système de séparation (9) en tant que gaz résiduel en dehors du système de séparation (9) en direction de la centrale thermique en montage-bloc (11).

17. Procédé selon l'une quelconque des revendications 11 à 16,
comportant :
- la méthanisation du gaz résiduel et/ou du gaz de processus à l'aide d'un catalyseur.
